# EUROPÄISCHE PATENTSCHRIFT

(11) **EP 3 102 343 B1**
(45) Veröffentlichungstag und Bekanntmachung des Hinweises auf die Patenterteilung: **28.09.2022**
(21) Anmeldenummer: 15714394.2
(22) Anmeldetag: 05.02.2015
(51) Int. Cl.: B08B 5/02, B23K 26/16, B08B 15/04, B08B 15/00

(54) **VORRICHTUNG UND VERFAHREN ZUM ABSAUGEN UND/ODER AUSBLASEN EINES BAUTEILS**
APPARATUS AND METHOD FOR SUCTIONING AND/OR BLOWING OUT A PART
APPAREIL ET PROCÉDÉ POUR L'ASPIRATION ET/OU LE SOUFFLAGE D'UN COMPOSANT

(30) Priorität: 05.02.2014 DE 102014001427
(43) Veröffentlichungstag der Anmeldung: 14.12.2016
(73) Patentinhaber: Robot Technology GmbH, 63801 Kleinostheim (DE)
(72) Erfinder: MAIER, Stefan, 63762 Großostheim (DE)
(74) Vertreter: Nitz, Astrid
(86) Internationale Anmeldenummer: PCT/DE2015/000044
(87) Internationale Veröffentlichungsnummer: WO 2015/117590

(56) Entgegenhaltungen:
- EP-A1- 2 444 189
- DE-A1- 19 549 176
- US-A1- 2014 007 372

## Beschreibung

Die Erfindung betrifft eine Vorrichtung zum Absaugen und/oder Ausblasen eines Bauteils, insbesondere eines dünnwandigen Bauteils, insbesondere einer Säulenverkleidung nach dem Wortlaut von Anspruch 1 und ein Verfahren zum Absaugen und/oder Ausblasen von Bauteilen, insbesondere dünnwandigen Bauteilen, insbesondere Säulenverkleidungen nach dem Wortlaut von Anspruch 7.

EP 2 444 189 A1 offenbart einen Schneidtisch für eine Brennschneidanlage, wobei in einer Konsole ein an ein Abluftgebläse anschließbarer, feststehender Absaugkanal vorgesehen ist und ein Verfahren dafür, gemäß dem Oberbegriff der Ansprüche 1 und 7.

DE 195 49 176 A1 offenbart ein Verfahren zum Ausblasen und Reinigen von Ausnehmungen von Werkstücken, wobei Gas in einen Behälter komprimiert und anschließend in zumindest eine Ausnehmung des Werkstücks expandiert wird zur Entfernung von insbesondere Spänen, die in den Ausnehmungen abgelagert sind.

Beim Bearbeiten von Kunststoffbauteilen, insbesondere von Säulenverkleidungen für Automobil-Innenverkleidungen, werden am Rand überstehende Textilien oder auch innenliegende Ausschnitte insbesondere mit einem Laserscanningverfahren beschnitten. Die Ausschnitte sind rundherum um das Bauteil verteilt und können auch sehr nahe zueinander oder sehr nahe am Rand liegen. Bei diesen Ausschnitten besteht die Gefahr darin, dass Schmauch und Ruß, die aus dem Laserverfahren entstehen, durch Luftströmungen über das Bauteil gezogen werden und es zu irreversiblen Beschädigungen des Bauteils kommt.

Aufgabe der vorliegenden Erfindung ist es, eine flexible Vorrichtung bereitzustellen, die es ermöglicht, die nachteiligen Dämpfe und Ruße sicher und zuverlässig zu entfernen, ohne die Nachteile des Stands der Technik in Kauf zu nehmen.

Die Aufgabe wird gelöst durch eine Vorrichtung zum Absaugen und/oder Ausblasen eines Bauteils, insbesondere eines dünnwandigen Bauteils, insbesondere einer Säulenverkleidung, die mit einem Laserscanner zu bearbeiten ist, wobei Dämpfe entstehen, umfassend: zumindest eine schaltbare Absaugklappe, die vorbestimmt mit einer Steuerung zu öffnen und zu schließen ist, so dass beim Auftreten von Dämpfen in einem vorbestimmten Bereich die dem Bereich zugeordnete Absaugklappe zu betätigen ist und die Dämpfe absaugt und/oder ausbläst, wobei durch eine Drehbarkeit um eine Drehachse in Längsrichtung der Absaugvorrichtung weitere Bauteilbereiche abzusaugen sind. Ergänzend oder alternativ zum Absaugen kann auch ein Ausblasen durch die Klappen stattfinden. In der Anmeldung ist also dementsprechend jeweils unter dem Begriff Absaugklappe auch alternativ Ausblasklappe gemeint und beim Begriff Absaugen kann auch Ausblasen vorgenommen werden.

Durch den Laserscanner können somit insbesondere dünnwandigen Bauteile berührungslos geschnitten werden. Und durch die Erfindung wird zugleich verhindert, dass es zu Verbrennungen und Verrußungen der Bauteile kommt, da eine gezielte und schnelle Absaugung der entstandenen Dämpfe vor Ort vorgenommen wird.

Vorteilhaft ist es, wenn vier Absaugklappen vorgesehen sind, die beim Auftreten von Dämpfen in vorbestimmten Bereichen derart angesteuert sind, dass der jeweilige Bereich, der zu bearbeiten ist, im Wesentlichen lokal abzusaugen ist.

Vorteilhaft ist es, wenn in Fortsetzung einer Absaugklappe, insbesondere mehrerer Absaugklappen in einer Kanalvorrichtung ein Absaugkanal zum Absaugen der Dämpfe, insbesondere mehrere Absaugkanäle, insbesondere jeweils den Absaugklappen zugeordnet vorgesehen sind, die in vorbestimmte Bereiche des abzusaugenden Bauteils führen und diese absaugen. Die Bauteile können über die Kanalvorrichtung im Sinne einer Vorrichtungszentrierung auf der Drehachse aufgebaut werden. Die Kanalvorrichtung umfasst beispielhaft eine gefräste Aluminiumkontur oder ein Gussmaterial. Die Kanalvorrichtung kann auf einfache Weise an die räumlichen Gegebenheiten des abzusaugenden Bauteils angepasst werden, wobei sie selbst keine Absaugklappen aufweisen muss, wodurch der Aufwand, Platzbedarf und die Kosten geringer gehalten werden können.

Durch eine Drehbarkeit um eine Drehachse in Längsrichtung der Absaugvorrichtugn sind weitere Bauteilbereiche absaugbar. Insbesondere ist eine um etwa +/-120° drehbare Drehachse in eine Laserstation des Laserscanners eingebaut. Die Absaugung ist insbesondere in der Drehachse integriert und erfolgt insbesondere über einen Absaugkanal. Im Absaugkanal oder mehreren Absaugkanälen sind mehrere, insbesondere vier schaltbare Absaugklappen integriert, die einzeln - je nach lokalem Bedarf - geöffnet und geschlossen werden können. Die Absaugklappen werden so gesteuert, dass Verschmutzungen vermieden werden.

Vorteilhaft ist es, wenn eine Drehachse in im Wesentlichen senkrechter Richtung integriert ist, die das Bauteil um eine senkrechte Achse drehbar macht, wodurch weitere Bauteilbereiche abzusaugen sind.

Vorteilhaft ist es, wenn eine Achsenplatte mit einer oder mehreren Bohrungen der senkrechten Drehachse zugeordnet ist, die je nach Drehstellung die Absaugklappe und/oder Absaugklappen zumindest teilweise abdeckt und/oder zumindest teilweise frei lässt, so dass weitere Bauteilbereiche abzusaugen sind.

Vorteilhaft ist es, wenn die Absaugklappe einen beweglichen Zylinder, insbesondere einen Pneumatikzylinder und/oder Elektrozylinder umfasst.

Die Aufgabe wird ebenfalls gelöst durch ein Verfahren zum Absaugen und/oder Ausblasen von Bauteilen, insbesondere dünnwandigen Bauteilen, insbesondere Säulenverkleidungen, die mit einem Laserscanner zu bearbeiten sind, wobei Dämpfe entstehen, insbesondere unter Verwendung einer Vorrichtung nach einem der Ansprüche 1 bis 6, dadurch gekennzeichnet, dass die Dämpfe über zumindest einen Absaugkanal, insbesondere mehrere Absaugkanäle, zum Absaugen der Dämpfe, abgesaugt werden mit zumindest einer schaltbaren Absaugklappe, die vorbestimmt mit einer Steuerung zu öffnen und zu schließen ist, so dass beim Auftreten von Dämpfen in dem vorbestimmten Bereich die dem Bereich zugeordnete Absaugklappe betätigt wird und die Dämpfe in dem vorbestimmten Bereich absaugt werden, wobei durch eine Drehung um eine Drehachse in Längsrichtung der Absaugvorrichtung weitere Bauteilbereiche abgesaugt werden.

Vorteilhaft ist es, wenn vier Absaugkanäle und zugeordnete Absaugklappen vorgesehen sind, wobei die Absaugklappen auf einen Bearbeitungsort abgestimmt zu öffnen und zu schließen sind, so dass die Dämpfe lokal abgesaugt werden.

Vorteilhaft ist es, wenn das zu bearbeitende Bauteil zwischen Bearbeitungsschritten und/oder während Bearbeitungsschritten um eine Längsachse und/oder Querdrehachse gedreht wird, wobei vorher und/oder währenddessen und/oder nachher eine Absaugung mit den Absaugklappen vorgenommen wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine Vorrichtung zum Absaugen und/oder Ausblasen eines Bauteils in perspektivischer Ansicht,
- Fig. 2: eine Vorrichtung zum Absaugen und/oder Ausblasen eines Bauteils in einem Ausschnitt,
- Fig. 3: eine Vorrichtung zum Absaugen und/oder Ausblasen eines Bauteils mit einem Bauteil,
- Fig. 4: eine Schnittdarstellung einer Vorrichtung zum Absaugen und/oder Ausblasen eines Bauteils und
- Fig. 5: eine Vorrichtung zum Absaugen und/oder Ausblasen eines Bauteils mit mehreren Drehachsen.

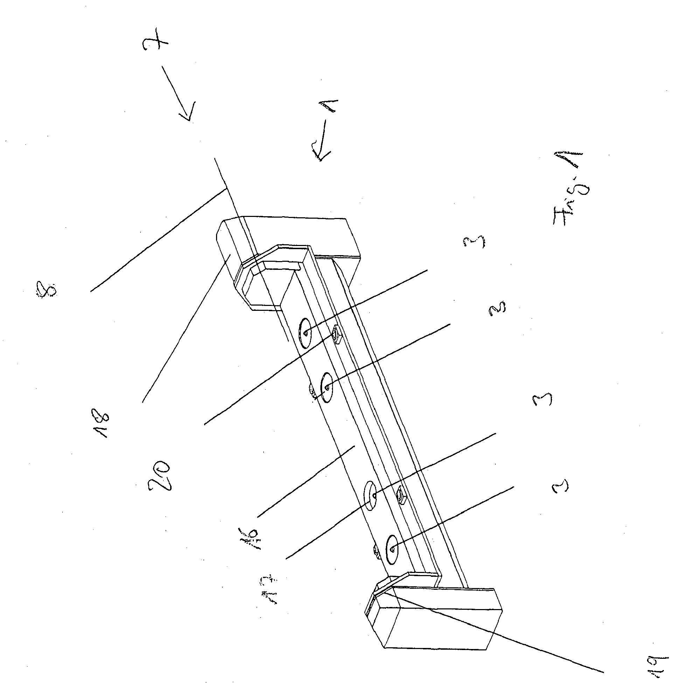

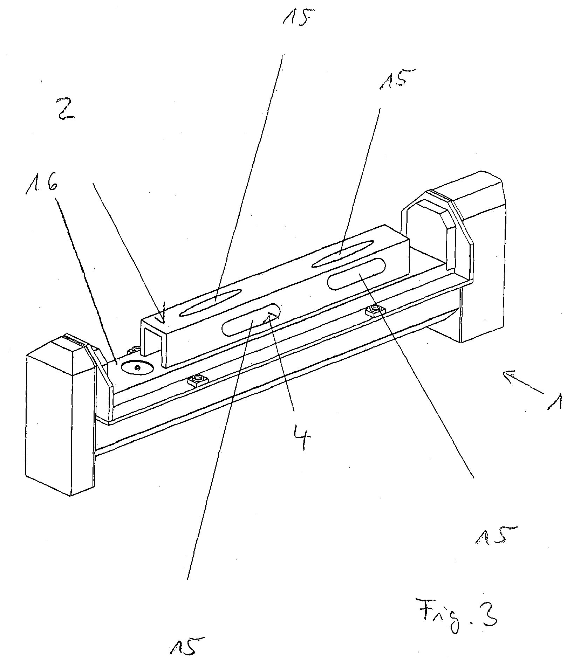

Fig. 1 zeigt eine Vorrichtung 1 zum Absaugen und/oder Ausblasen eines Bauteils, beispielsweise aus Fig. 3, in perspektivischer Ansicht. Die Vorrichtung 1 weist eine Drehachse 7 in Längsrichtung 8 auf. Die Drehachse 7 ist insbesondere um +/- 120° drehbar und beispielhaft in eine nicht dargestellte Laserstation für einen Laserscanner integriert. Die Vorrichtung 1 ist beispielhaft mit einem Drehantrieb 18 und einem Gegenlager 19 ausgestattet.

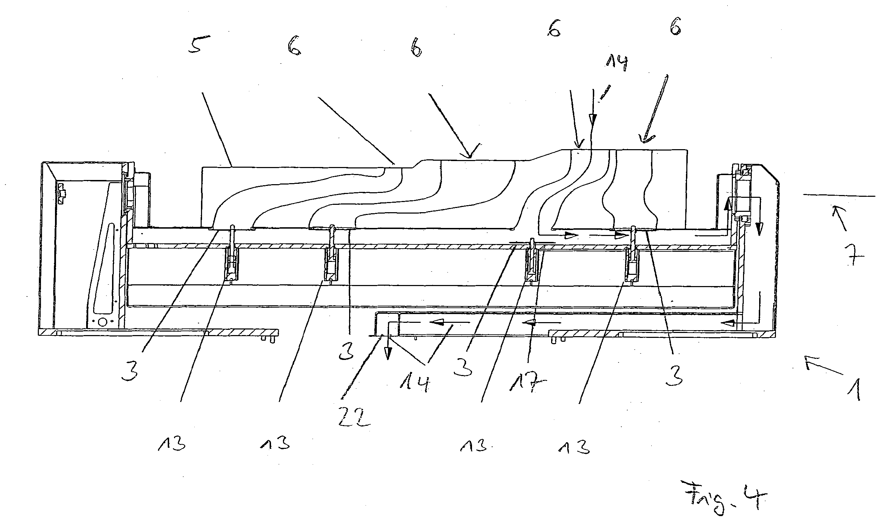

In einer Oberseite 16 der Vorrichtung 1 sind mehrere Absaugklappen 3 vorgesehen, beispielhaft vier. Die Absaugklappen 3, die im Inneren der Vorrichtung 1 durch eine Druckversorgung insbesondere eine Unterdruckversorgung beaufschlagt sind, werden durch eine Steuerung nach einer vorbestimmten Reihenfolge derart zum Absaugen geöffnet und geschlossen, dass in einem darüber angeordneten Bauteil in vorbestimmten Bereichen durch einen Bearbeitungsschritt entstehende Dämpfe, insbesondere beim Laserscannerschneiden, gezielt und ohne Umwege abgesaugt werden. Gerade beim Laserscannerschneiden werden sehr hohe Bearbeitungsfrequenzen erreicht, die durch die vorliegende Erfindung vorteilhaft ebenso schnell durch die Absaugung begleitet werden können, wobei im Vergleich zum Erfolg eine sehr geringe Anzahl Saugbereiche eingesetzt werden. Die Druckversorgung ist detaillierter in Fig. 4 dargestellt. Eine beispielhaft geöffnete Absaugklappe 17 ermöglicht dann eine gezielte und schnelle Absaugung eines bearbeiteten Bereiches des Bauteils. Die Bauteile können über eine Vorrichtungszentrierung 20 auf der Drehachse 7 aufgebaut werden.

Durch einen Laserscanner können insbesondere dünnwandigen Bauteile berührungslos geschnitten werden, insbesondere werden Bearbeitungsausschnitte eingebracht. Dazu ist eine erfindungsgemäße Absaugung an den Bauteilen sehr vorteilhaft, da es hier ansonsten zu Verbrennungen und einem Verrußen der Bauteile kommt.

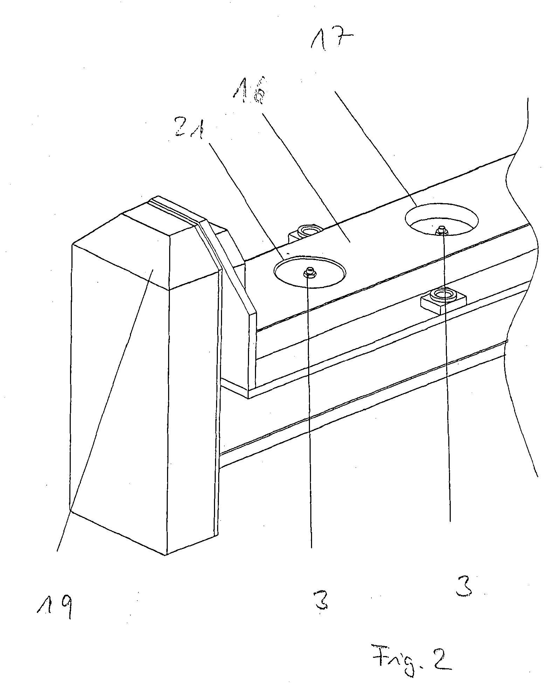

Fig. 2 zeigt eine Vorrichtung 1 zum Absaugen und/oder Ausblasen eines Bauteils in einem Ausschnitt mit Absaugklappen 3. Eine der Absaugklappen 17 ist geöffnet und die andere Absaugklappe 21 ist geschlossen. Ein beispielhafter Aufbau einer Absaugklappe 3 ist in Fig. 4 im Schnitt dargestellt.

Fig. 3 zeigt eine Vorrichtung 1 zum Absaugen und/oder Ausblasen eines Bauteils 2. Das Bauteil 2 ist auf der Oberseite 16 der Vorrichtung 1 oberhalb von Absaugklappen 3 angeordnet. In dem Bauteil 2 sind Bearbeitungsausschnitte 15 eingearbeitet, beispielsweise durch einen Laserscanner. Die Absaugklappen, die darunter angeordnet sind, werden erfindungsgemäß so angesteuert, dass jeweils der am nächsten liegende Bereich 4 des Bauteils 2, in dem Dämpfe entstehen, schnell und sicher abgesaugt werden kann.

Das Bauteil 2 wird beispielsweise in einer Nullposition von der Drehachse 7 in einem oberen Bereich hinten und vorne beschnitten. Dazu ist die nächstliegende Absaugklappe geöffnet.

Dann wird beispielsweise ein Ausschnitt nahe am Randbereich geschnitten. Hier könnte es zum Überspringen des Schmauches führen, wenn weiterhin die erste Absaugklappe geöffnet wäre. Daher öffnet nun die Absaugklappe 3 und es werden die Ausschnitte beschnitten. Nachfolgend dreht die Drehachse 7 um 90° und es werden die Seiten beschnitten. Diese können weiterhin mit dem Absaugkanal 6 beschnitten werden. Anschließend werden die Ausschnitte an den Seitenflanken beschnitten. Hierzu schließt die Absaugklappe 3 und die Absaugklappe 3 öffnet. Dann können diese Ausschnitte beschnitten werden. Nachfolgend dreht das Bauteil 2 um 180° und die zweite Seite kann beschnitten werden. Hierzu kann die Absaugklappe 3 ebenso verwendet werden. Im Anschluss daran öffnet die Absaugklappe 3 und die Ausschnitte können auf der Seite bearbeitet werden. Durch diese Steuerung Reihenfolge ist eine schmauchfreie Produktion der Bauteile 2 gewährleistet.

Fig. 4 zeigt eine Schnittdarstellung einer Vorrichtung 1 zum Absaugen und/oder Ausblasen eines Bauteils 2. Auf der Oberseite 16 der Vorrichtung 1 ist eine Kanalvorrichtung 5 angeordnet. Die Kanalvorrichtung 5 weist Absaugkanäle 6 auf, die beispielsweise in Aluminium eingefräst sein können oder mit einer Druckgussform hergestellt sein können. Die Kanalvorrichtung 5 kann auf einfache Weise an die räumlichen Gegebenheiten des Bauteils 2 angepasst werden, wobei sie keine aufwendigeren Absaugklappen aufweisen muss. Dieselben Absaugklappen 3 können dann für unterschiedlichste Bauteile 2 verwendet werden, da sie - wie beispielhaft dargestellt - zentral angeordnet sind. Die Ansteuerung über die Absaugklappen in den Drehachsen hat den Vorteil, dass in den Kanalvorrichtungen keine aktiven Klappen mehr benötigt werden und hierdurch der Aufwand, Platzbedarf und die Kosten geringer gehalten werden können. Die Absaugkanäle 6 sind den Absaugklappen 3 entsprechend zugeordnet geführt und jeweils an örtliche Gegebenheiten des Bauteils 2 entsprechend angepasst ausgebildet, so dass eine gezielte, individuelle Absaugung vor Ort stattfinden kann. Beispielhaft ist eine Strömungsrichtung 14 dargestellt, die durch eine geöffnete Absaugplatte 17 hindurch in die Vorrichtung 1 geleitet wird und dann zu einem Ausgang 22.

Die Absaugklappen 3 sind mit einem Zylinder 13 zur Betätigung versehen, insbesondere einem Pneumatikzylinder und/oder einem Elektrozylinder, wodurch eine schnelle und sichere Betätigung der Absaugklappen möglich wird. Ergänzend oder alternativ zum Absaugen kann auch ein Ausblasen durch die Klappen 3 stattfinden.

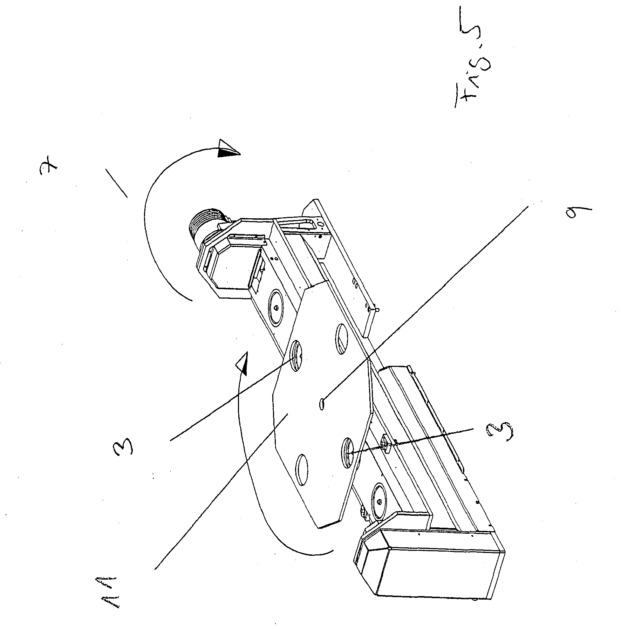

Fig. 5 zeigt eine Vorrichtung zum Absaugen und/oder Ausblasen eines Bauteils 2 mit mehreren Drehachsen. Beispielhaft wird zusätzlich zur ersten Drehachse 7 eine zweite Drehachse 9 senkrecht zur ersten Drehachse 7 eingesetzt, die das Bauteil 2 zusätzlich um eine zweite Achse drehen kann. Die Achsenplatte 11 ist mit vier Bohrungen versehen, worüber die Absaugung durchgeführt werden kann. Jeweils in der festen Stellung kann dann durch die geöffnete Absaugklappensteuerung in dem unteren Bereich, die auch vorher schon vorhanden war, die Absaugung nach oben durchgeführt werden. Somit ist keine zusätzliche Absaugklappensteuerung notwendig, sondern die vorhandene kann verwendet werden. Der Vorteil besteht darin, dass das Bauteil nochmals um eine zweite Achse gedreht werden kann und somit die Flexibilität weiter gesteigert werden.

### BEZUGSZEICHENLISTE

- 1: Vorrichtung
- 2: Bauteil
- 3: Klappe, insbesondere Absaugklappe
- 4: Bereich
- 5: Kanalvorrichtung
- 6: Kanal, insbesondere Absaugkanal
- 7: Drehachse
- 8: Längsrichtung
- 9: Drehachse
- 10: senkrechte Richtung
- 11: Achsenplatte
- 12: Bohrung
- 13: Zylinder
- 14: Strömungsrichtung
- 15: Bearbeitungsausschnitt
- 16: Oberseite
- 17: geöffnete Absaugklappe
- 18: Drehantrieb
- 19: Gegenlager
- 20: Vorrichtungszentrierung
- 21: geschlossene Absaugklappe
- 22: Ausgang

## Patentansprüche

1. Vorrichtung (1) zum Absaugen und/oder Ausblasen eines Bauteils (2), insbesondere eines dünnwandigen Bauteils, insbesondere einer Säulenverkleidung, die mit einem Laserscanner zu bearbeiten ist, wobei Dämpfe entstehen, umfassend: zumindest eine schaltbare Absaugklappe (3), die vorbestimmt mit einer Steuerung zu öffnen und zu schließen ist, so dass beim Auftreten von Dämpfen in einem vorbestimmten Bereich (4) die dem Bereich zugeordnete Absaugklappe (3) zu betätigen ist und die Dämpfe absaugt und/oder ausbläst, **dadurch gekennzeichnet, dass** durch eine Drehbarkeit um eine Drehachse (7) in Längsrichtung (8) der Absaugvorrichtung (1) weitere Bauteilbereiche abzusaugen sind.

2. Vorrichtung nach Anspruch 1, **dadurch gekennzeichnet, dass** vier Absaugklappen (3) vorgesehen sind, die beim Auftreten von Dämpfen in vorbestimmten Bereichen derart angesteuert sind, dass der jeweilige Bereich (4), der zu bearbeiten ist, im Wesentlichen lokal abzusaugen ist.

3. Vorrichtung nach Anspruch 1 oder 2, **dadurch gekennzeichnet, dass** in Fortsetzung einer Absaugklappe (3), insbesondere mehrerer Absaugklappen (3) in einer Kanalvorrichtung (5) ein Absaugkanal (6) zum Absaugen der Dämpfe, insbesondere mehrere Absaugkanäle (6), insbesondere jeweils den Absaugklappen zugeordnet vorgesehen sind, die in vorbestimmte Bereiche (4) des abzusaugenden Bauteils (2) führen und diese absaugen.

4. Vorrichtung nach einem der Ansprüche 1 bis 3, **dadurch gekennzeichnet, dass** eine Drehachse (9) in im Wesentlichen senkrechter Richtung (10) integriert ist, die das Bauteil (2) um eine senkrechte Achse drehbar macht, wodurch weitere Bauteilbereiche abzusaugen sind.

5. Vorrichtung nach einem der Ansprüche 1 bis 4, **dadurch gekennzeichnet, dass** eine Achsenplatte (11) mit einer oder mehreren Bohrungen (12) der senkrechten Drehachse (9) zugeordnet ist, die je nach Drehstellung die Absaugklappe (3) und/oder Absaugklappen zumindest teilweise abdeckt und/oder zumindest teilweise frei lässt, so dass weitere Bauteilbereiche abzusaugen sind.

6. Vorrichtung nach einem der Ansprüche 1 bis 5, **dadurch gekennzeichnet, dass** die Absaugklappe (3) einen beweglichen Zylinder (13), insbesondere einen Pneumatikzylinder und/oder Elektrozylinder umfasst.

7. Verfahren zum Absaugen und/oder Ausblasen von Bauteilen (2), insbesondere dünnwandigen Bauteilen, insbesondere Säulenverkleidungen, die mit einem Laserscanner zu bearbeiten sind, wobei Dämpfe entstehen, insbesondere unter Verwendung einer Vorrichtung (1) nach einem der Ansprüche 1 bis 6, **dadurch gekennzeichnet, dass** die Dämpfe über zumindest einen Absaugkanal (6), insbesondere mehrere Absaugkanäle, zum Absaugen der Dämpfe, abgesaugt werden mit zumindest einer schaltbaren Absaugklappe (3), die vorbestimmt mit einer Steuerung zu öffnen und zu schließen ist, so dass beim Auftreten von Dämpfen in dem vorbestimmten Bereich (4) die dem Bereich zugeordnete Absaugklappe (3) betätigt wird und die Dämpfe in dem vorbestimmten Bereich (4) absaugt werden, **dadurch gekennzeichnet, dass** durch eine Drehung um eine Drehachse (7) in Längsrichtung (8) der Absaugvorrichtung (1) weitere Bauteilbereiche abgesaugt werden.

8. Verfahren nach Anspruch 7, **dadurch gekennzeichnet, dass** vier Absaugkanäle und zugeordnete Absaugklappen (3) vorgesehen sind, wobei die Absaugklappen auf einen Bearbeitungsort abgestimmt zu öffnen und zu schließen sind, so dass die Dämpfe lokal abgesaugt werden.

9. Verfahren nach Anspruch 7 oder 8, **dadurch gekennzeichnet, dass** das zu bearbeitende Bauteil (2) zwischen Bearbeitungsschritten und/oder während Bearbeitungsschritten um eine Längsachse und/oder Querdrehachse gedreht wird, wobei vorher und/oder währenddessen und/oder nachher eine Absaugung mit den Absaugklappen vorgenommen wird.

## Claims

1. Device (1) for suctioning and/or blowing out a component (2), in particular a thin-walled component, in particular a column cladding, which is to be processed by a laser scanner, producing vapours, comprising at least one switchable suction valve (3), which is to be opened and closed by means of a control device so that, in the event of vapours occurring in a predetermined area (4) the suction flap (3) assigned to the area shall be activated and the vapours sucked and/or blown out, **characterised by** the fact that further parts are to be sucked by a rotary axis (7) in the longitudinal direction (8) of the suction device (1).

2. Device according to Claim 1, **characterised by** the provision of four suction valves (3) which are activated in the event of vapours occurring in predetermined areas in such a way that the respective area (4) to be worked is essentially to be extracted locally.

3. Device according to Claim 1 or 2, **characterised by** the fact that, following a suction valve (3), in particular several suction valves (3), in a duct device (5), an exhaust duct (6) is provided for the extraction of the vapours, in particular several suction ducts (6), in each case assigned to the suction valves located in predetermined areas (4) of the structure to be sucked (2) and suction them.

4. Device according to one of claims 1 to 3, **characterised by** the integration of an axis of rotation (9) in an essentially vertical direction (10) which makes the component (2) rotate around a vertical axis, thus allowing further areas of the component to be sucked off.

5. Device according to one of claims 1 to 4, **characterised by** the assignment of an axle plate (11) with one or more holes (12) to the vertical axis of rotation (9), which, depending on the rotation position, covers at least part of the suction valve (3) and/or suction valves at least partly and/or at least partly free, so that further areas of the component have to be extracted.

6. Device according to one of claims 1 to 5, **characterised by** the suction valve (3) comprising a movable cylinder (13), in particular a pneumatic cylinder and/or an electric cylinder.

7. Method for suctioning and/or blowing out components (2), in particular thin-walled components, in particular column cladding, which are to be processed by a laser scanner, producing vapours, in particular by using a device (1) according to one of claims 1 to 6, **characterised by** the vapour flowing through at least one suction channel (6), in particular several suction channels, to suction of the vapours, which are sucked with at least one switchable suction valve (3), which is to be opened and closed by means of a control device, so that when vapours occur in the predetermined area (4), the suction valve assigned to the area (3) is activated and the vapours are sucked in the predetermined area (4), **characterised by**: additional parts of the component are extracted by turning a rotary axis (7) in the longitudinal direction (8) of the suction device (1).

8. Method according to claim 7, **characterised by** the provision of four suction channels and associated suction valves (3), whereby the suction valves are to be opened and closed in accordance with a machining location so that the vapours are locally extracted.

9. Method according to claim 7 or 8, **characterised by** rotating the component (2) between machining steps and/or during machining steps around a longitudinal axis and/or transverse axis with suction valves before and/or during and/or afterwards.

## Revendications

1. Dispositif (1) d'aspiration et/ou de soufflage d'un élément (2), en particulier d'un élément à paroi mince, en particulier d'un revêtement de colonne, qui doit être usiné à l'aide d'un scanner laser en dégageant des vapeurs, comprenant au moins un clapet d'aspiration commutable (3), qui doit être ouvert et fermé à l'avance au moyen d'une commande, de telle que: en cas d'apparition de vapeurs dans une zone prédéterminée (4), le clapet d'aspiration (3) assigné à cette zone doit être actionné et les vapeurs doivent être aspirées et/ou évacuées par une rotation autour d'un axe de rotation (7) dans le sens longitudinal (8) du dispositif d'aspiration (1).

2. Dispositif selon la revendication 1, **caractérisé par** la présence de quatre clapets d'aspiration (3) qui, en cas d'apparition de vapeurs dans des zones prédéterminées, sont dirigés de manière à ce que la zone (4) à travailler soit essentiellement aspirée localement.

3. Dispositif selon la revendication 1 ou 2, **caractérisé par le fait que**, dans le prolongement d'un clapet d'aspiration (3), notamment de plusieurs clapets d'aspiration (3), dans un dispositif à canal (5), un canal d'aspiration (6) est prévu pour l'aspiration des vapeurs, en particulier plusieurs canaux d'aspiration (6), en particulier chacun affecté aux clapets d'aspiration situés dans des zones prédéterminées (4) du l'élément à aspirer (2) et l'aspirer.

4. Dispositif selon l'une des revendications 1 à 3, **caractérisé par** l'intégration d'un axe de rotation (9) essentiellement vertical (10), qui fait pivoter le composant (2) autour d'un axe vertical, ce qui nécessite l'aspiration d'autres parties de composants.

5. Dispositif selon l'une des revendications 1 à 4, **caractérisé par le fait qu'**une plaque d'essieu (11) comportant un ou plusieurs trous (12) est affectée à l'axe vertical de rotation (9) qui, selon la position de rotation, recouvre et/ou libère au moins partiellement le clapet d'aspiration (3) et/ou les clapets d'aspiration, de sorte que d'autres composants soient qui doivent être aspirées.

6. Dispositif selon l'une des revendications 1 à 5, **caractérisé par le fait que** le clapet d'aspiration (3) comporte un cylindre mobile (13), notamment un cylindre pneumatique et/ou un cylindre électrique.

7. Procédé d'aspiration et/ou de vidange de composants (2), en particulier de composants à paroi mince, en particulier les revêtements de colonnes, qui doivent être usinés à l'aide d'un scanner laser, produisant des vapeurs, notamment en utilisant un dispositif (1) selon l'une des revendications 1 à 6, **caractérisé par le fait que** les vapeurs passent par au moins un canal d'aspiration (6), en particulier plusieurs Les conduits d'aspiration des vapeurs doivent être aspirés au moyen d'au moins un clapet d'aspiration commutable (3) qui doit être ouvert et fermé par un dispositif de commande de telle sorte que, en cas d'apparition de vapeurs dans la plage prédéterminée (4), le clapet d'aspiration (3) assigné à la plage prédéterminée soit actionné et les vapeurs dans la plage prédéterminée. (4) d'aspiration se caractérisent par **le fait qu'**une rotation autour d'un axe de rotation (7) dans le sens longitudinal (8) du dispositif d'aspiration (1) permet d'aspirer d'autres parties de composants.

8. Procédé selon la revendication 7, **caractérisé par** l'existence de quatre canaux d'aspiration et de clapets d'aspiration associés (3), les clapets d'aspiration devant être ouverts et fermés en fonction d'un lieu d'usinage, de sorte que les vapeurs soient aspirées localement.

9. Procédé selon la revendication 7 ou 8, **caractérisé par le fait que** le composant (2) à usiner est tourné autour d'un axe longitudinal et/ou transversal entre les étapes d'usinage et/ou pendant les étapes d'usinage, avec aspiration préalable,/ou pendant et/ou postérieurement à l'aide des clapets d'aspiration.
